# EUROPÄISCHE PATENTSCHRIFT

(11) **EP 2 628 566 B1**
(45) Veröffentlichungstag und Bekanntmachung des Hinweises auf die Patenterteilung: **18.11.2015**
(21) Anmeldenummer: 13000616.6
(22) Anmeldetag: 07.02.2013
(51) Int. Cl.: B23Q 1/54, A61C 13/12, B23Q 11/08

(54) **Bearbeitungsvorrichtung für die Herstellung von zahntechnischen Werkstücken**
Processing device for the production of dental workpieces
Dispositif de traitement pour la fabrication de pièces à usiner dentaires

(30) Priorität: 14.02.2012 AT 1872012
(43) Veröffentlichungstag der Anmeldung: 21.08.2013
(73) Patentinhaber: STEGER, Heinrich, 39031 Bruneck (IT)
(72) Erfinder: STEGER, Heinrich, 39031 Bruneck (IT)
(74) Vertreter: Gangl, Markus

(56) Entgegenhaltungen:
- EP-A1- 0 402 720
- EP-A1- 1 709 941
- EP-A1- 1 795 298
- EP-A2- 0 543 258
- WO-A2-2009/100863
- US-A- 3 703 124

## Beschreibung

Die Erfindung betrifft eine Bearbeitungsvorrichtung für die Herstellung von zahntechnischen Werkstücken, mit einem Gehäuse, einer relativ zum Gehäuse bewegbaren Haltevorrichtung für einen Formrohling und einem Bearbeitungswerkzeug, mit dem unter Zufuhr von Flüssigkeit, insbesondere Wasser, in einem Bearbeitungsbereich der Formrohling bearbeitbar ist, wobei der Bearbeitungsbereich von einer vom Gehäuse gesonderten Abdeckvorrichtung zumindest teilweise umgeben ist.

Auf dem Gebiet der Herstellung von Zahnersatz gibt es bereits seit vielen Jahren diverse, meistens automatische Bearbeitungsvorrichtungen. Dabei werden aus Formrohlingen (z.B. aus Zirkon, Keramik, Metall, Plastik, Wachs usw.) entsprechende dentale Ersatzteile gefräst. Um den vom Formrohling abgefrästen Abfall (Staub, Späne, usw.) aufzufangen und eine Verschmutzung zu verhindern, sind um den Bearbeitungsbereich Absaugvorrichtungen angeordnet, die den Schmutz sofort absaugen. Zum Aufbau einer solchen bekannten "trockenen" Bearbeitungsvorrichtung sei auf die EP 2 247 405 B1 verwiesen.

Da beim Fräsen je nach bearbeitetem Material auch große Hitze entstehen kann, werden auch solche Bearbeitungsvorrichtungen eingesetzt, bei denen eine Kühlflüssigkeit während der Bearbeitung in den Bearbeitungsbereich bzw. auf den Formrohling gespritzt wird. Dadurch wird eine zu starke Erhitzung verhindert. Zugleich wird das weggefräste Material durch die Flüssigkeit abgeführt bzw. ausgewaschen. Um die gesamten Komponenten der Bearbeitungsvorrichtung vor der Flüssigkeit und vor den sehr kleinen ausgewaschenen Fräsabfällen zu schützen, müssen vor allem die Antriebskomponenten der Bearbeitungsvorrichtung mit aufwändigen Dichtungen geschützt werden. Auch um die komplette Umgebung vor umherspritzender Flüssigkeit zu schützen, werden die Komponenten der Bearbeitungsvorrichtung komplett von einem meist wasserdichten Gehäuse umgeben und somit geschützt. In einem solchen Gehäuse muss dann im untersten Bereich auch eine Sammelvorrichtung ausgebildet sein, in der sich das abfließende Wasser sammelt und abfließen kann. Eine solche Vorrichtung ist meist sehr aufwändig.

Die EP 0 402 720 A1 zeigt ein Gerät zur Herstellung von zahnmedizinischen Formkörpern mit einer Kopiereinrichtung, wobei durch die Verwendung eines Abdeckgehäuses die Kopiereinrichtung und eine Wippe nicht von Kühlflüssigkeit verschmutzt werden.

Aus der EP 0 543 258 A2 ist eine Haube bekannt, mit der eine Verschmutzung einer Bearbeitungsvorrichtung von Inlays durch Kühl-Schmiermittel verhindert wird. Diese Abdeckvorrichtung schützt auch vor bei der Bearbeitung weggeschleuderten Teilen.

Weiters betrifft die Erfindung eine Bearbeitungsvorrichtung, bei der die Abdeckvorrichtung an der Haltevorrichtung befestigt ist und sich die Abdeckvorrichtung immer mit der Haltevorrichtung mit bewegt. Damit ist auch die Abdeckvorrichtung nicht der Bewegung der Haltevorrichtung im Weg, was beispielsweise der Fall sein könnte, wenn die Abdeckvorrichtung fix am Gehäuse oder am Trägerelement befestigt wäre.

Die EP 1 795 298 A1 zeigt eine solche gattungsbildende Werkzeugmaschine mit einer Beladeeinrichtung. An einem Horizontalschlitten für eine Werkstückhaltevorrichtung ist ein Spritzschutz angeordnet. Dieser bildet zusammen mit einer am Rahmen befestigten Abdeckung einen Schutz, sodass Späne oder Kühlmittel nicht hinausdringen.

Die Aufgabe der vorliegenden Erfindung liegt daher darin, eine gegenüber dem Stand der Technik verbesserte bzw. alternative Bearbeitungsvorrichtung zu schaffen. Insbesondere sollen keine aufwändige Dichtung und kein aufwändiger Flüssigkeitsschutz für alle Komponenten der Bearbeitungsvorrichtung gegeben sein. Zudem soll auf ein komplett abgedichtetes Gehäuse mit großem Sammelbehältnis verzichtet werden können. Weiters soll eine Bearbeitungsvorrichtung zur "trockenen" Bearbeitung einfach zu einer Bearbeitungsvorrichtung zur "nassen" Bearbeitung umrüstbar bzw. nachrüstbar sein. Zudem soll ein gezielt um den Bearbeitungsbereich wirkender Schutz erreicht werden.

Dies wird für eine Bearbeitungsvorrichtung mit den Merkmalen des Oberbegriffes von Anspruch 1 dadurch erreicht, dass - um eine einfache Nachrüstbarkeit zu garantieren - die Abdeckvorrichtung einen ersten Abdeckteil und einen zweiten Abdeckteil aufweist, wobei der erste, vorzugsweise schalenförmige, Abdeckteil die vom Bearbeitungswerkzeug abgewandte Seite des Bearbeitungsbereichs abdeckt. Somit ist vor allem der hintere Teil des Bearbeitungsbereichs - in welchen die meiste Flüssigkeit gespritzt wird - geschützt. Zudem umgibt erfindungsgemäß das zweite, vorzugsweise ringförmige, Abdeckteil die dem Bearbeitungswerkzeug zugewandte Seite des Bearbeitungsbereichs. Somit ist ein kompakterer Aufbau möglich. Das heißt, es muss kein großes, wasserdichtes Gehäuse vorgesehen sein, sondern es wird der Bearbeitungsbereich direkt von einer relativ kleinen Abdeckvorrichtung umgeben. Diese Abdeckvorrichtung bildet sozusagen einen Topf, in dem der Formrohling angeordnet bzw. gehalten ist und in den das Bearbeitungswerkzeug zum Bearbeiten des Formrohlings eingefahren werden kann.

Bevorzugt kann vorgesehen sein, dass die Haltevorrichtung an einem am Gehäuse befestigten Trägerelement bewegbar gelagert ist, wobei die Abdeckvorrichtung zwischen Trägerelement und Bearbeitungsbereich angeordnet ist. Somit ist nur die Haltevorrichtung und Abdeckvorrichtung direkt der Flüssigkeit ausgesetzt und das Trägerelement und das Gehäuse sind vor der Flüssigkeit und den darin gelösten Materialien geschützt. Es muss somit nur die Abdeckvorrichtung und die Haltevorrichtung flüssigkeitsresistent sein.

Bevorzugt kann vorgesehen sein, dass die Haltevorrichtung die Abdeckvorrichtung mitbildet. Das heißt, beim Nachrüsten wird die Abdeckvorrichtung auf die Haltevorrichtung aufgesetzt bzw. aufgebracht und beide zusammen bilden dann einen Spritzschutz.

Grundsätzlich könnte in diesem ersten Abdeckteil eine Öffnung zum Sammeln und Abfließen des eingespritzten Wassers ausgebildet sein. Bevorzugt ist jedoch vorgesehen, dass der zweite Abdeckteil eine Auffangwanne für die Flüssigkeit aufweist. Somit fließt die gesamte, innerhalb der Abdeckvorrichtung gesammelte Flüssigkeit in der Auffangwanne zusammen.

Prinzipiell ist es möglich, dass der Bearbeitungsbereich komplett von einer Abdeckvorrichtung umgeben bzw. eingeschlossen ist. Es muss nur garantiert sein, dass das Bearbeitungswerkzeug in diesen Bearbeitungsbereich einfahren kann. Dazu könnte beispielsweise ein möglichst reißfestes elastisches bzw. nachgiebiges Schutzelement zwischen dem Bearbeitungswerkzeug und der restlichen Abdeckvorrichtung aufgespannt sein. Da aber vom Bearbeitungsbereich in Richtung Bearbeitungswerkzeug wenig Flüssigkeit zurückspritzt, ist bevorzugt vorgesehen, dass die Abdeckvorrichtung auf der dem Bearbeitungswerkzeug zugewandten Seite eine Öffnung aufweist. Dazu kann bevorzugt vorgesehen sein, dass der Bearbeitungsbereich bis auf die Öffnung von der Abdeckvorrichtung umgeben bzw. verschlossen ist.

Für die Bewegung des Formrohlings kann bevorzugt vorgesehen sein, dass die Haltevorrichtung einen Innenring und einen Außenring aufweist, die kardangelenkförmig angeordnet sind, wobei die Abdeckvorrichtung am Außenring befestigt ist. Es wäre auch möglich, dass die Abdeckvorrichtung am Innenring befestigt ist.

Die Flüssigkeit zum Kühlen des Bearbeitungsbereichs kann beispielsweise von einer Düse im Bereich der Haltevorrichtung oder von einer eigenständigen Einspritzvorrichtung zugeführt werden. Bevorzugt ist allerdings vorgesehen, dass am Bearbeitungswerkzeug eine Zuführeinrichtung für die Flüssigkeit angeordnet ist.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine 3D-Ansicht der Bearbeitungsvorrichtung,
- Fig. 2: das Trägerelement samt Haltevorrichtung und Bearbeitungswerkzeug,
- Fig. 3: die Haltevorrichtung samt Abdeckvorrichtung mit einem Schnitt,
- Fig. 4: das erste Abdeckteil in Ansichten und in einem Schnitt,
- Fig. 5: eine 3D-Ansicht des zweiten Abdeckteiles mit abgedeckter Auffangwanne,
- Fig. 6: eine 3D-Ansicht des zweiten Abdeckteiles mit offener Auffangwanne und
- Fig. 7: das zweite Abdeckteil in Ansichten und in einem Schnitt.

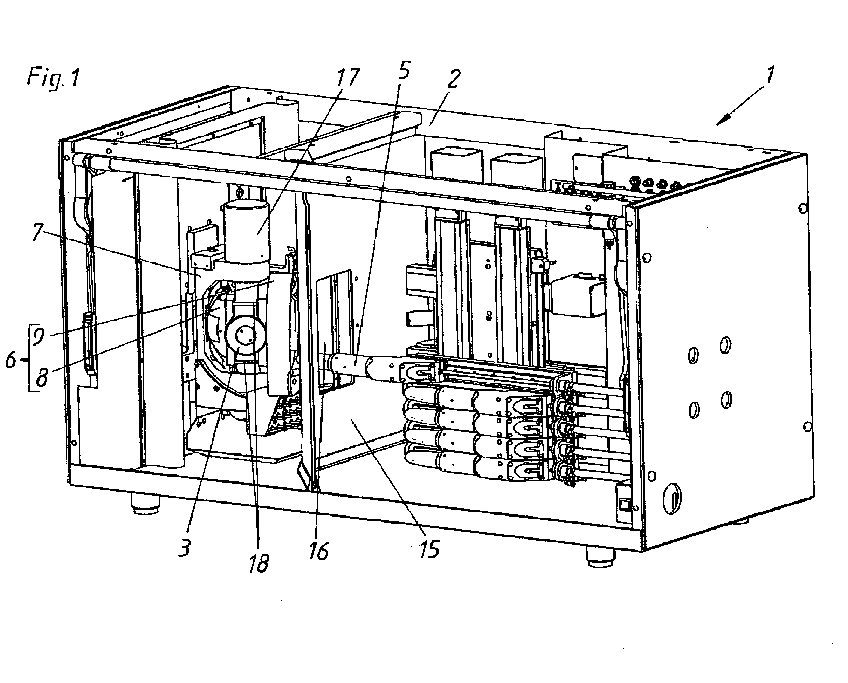

In Fig. 1 ist eine Bearbeitungsvorrichtung 1 dargestellt, die ein rahmenförmiges Gehäuse 2 aufweist. Dieses Gehäuse 2 kann Wände z.B. aus Glas aufweisen. In diesem Gehäuse 2 sind auf der rechten Seite die wesentlichen Antriebselemente für das Bearbeitungswerkzeug 5 dargestellt, auf die nicht näher eingegangen wird. Auf der linken Seite ist der Bereich dargestellt, in dem der zu bearbeitende Formrohling 4 angeordnet ist. Zwischen diesen beiden Bereichen befindet sich eine Trennwand 15, in welcher eine Durchtrittsöffnung 16 für das Bearbeitungswerkzeug 5 ausgebildet ist. In dieser Durchtrittsöffnung 16 sind nachgiebige Bürsten angeordnet, sodass zwar das Bearbeitungswerkzeug 5 durchfahren kann, jedoch kaum Staub oder Flüssigkeit aus dem linken Bereich austreten kann. Der linke Bereich weist ein entlang einer vertikalen Achse verfahrbares Trägerelement 7 auf. Dieses Trägerelement 7 ist C-förmig ausgebildet. Am oberen Ende dieses C-förmigen Trägerelementes 7 ist ein Antriebselement 17 angeordnet, durch welches die Haltevorrichtung 3 um eine vertikale Achse drehbar ist. Im vom Bearbeitungswerkzeug 5 abgewandten Bereich der Haltevorrichtung 3 ist das schalenförmige Abdeckteil 8 angebracht. Im dem Bearbeitungswerkzeug 5 zugewandten Bereich der Haltevorrichtung 3 ist das ringförmige Abdeckteil 9 angebracht. Diese beiden Abdeckteile 8 und 9 bilden gemeinsam die Abdeckvorrichtung 6 und sind durch die Verbindungsbolzen 18 miteinander verbunden.

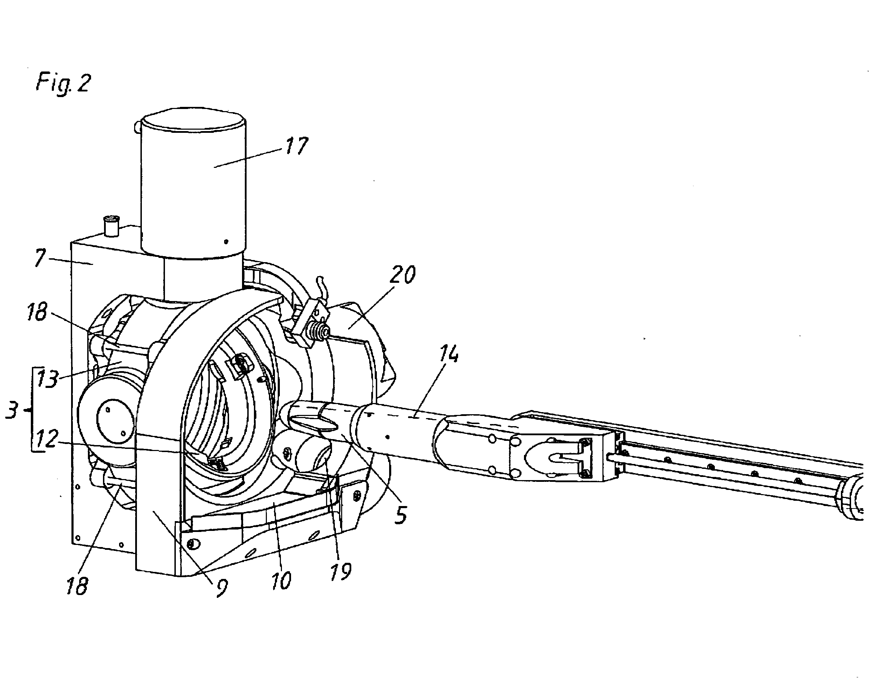

In Fig. 2 ist ersichtlich, dass die Haltevorrichtung 3 zweiteilig ausgebildet ist und einen um die vertikale Achse drehbaren Außenring 13 und einen um eine vorzugsweise horizontale Achse drehbaren und von der Antriebsvorrichtung 20 antreibbaren Innenring 12 aufweist. Es ist aus dieser Fig. 2 auch ersichtlich, dass das zweite Abdeckteil 9 eine Auffangwanne 10 aufweist. Zudem ist in diesem zweiten Abdeckteil 9 eine Luftabsaugöffnung 19 ausgebildet. Am Bearbeitungswerkzeug 5 ist strichliert eine Zuführeinrichtung 14 für eine Flüssigkeit angedeutet. Im Bereich der Spindel des Bearbeitungswerkzeuges 5 wird die Flüssigkeit in Richtung Bearbeitungsbereich B gespritzt.

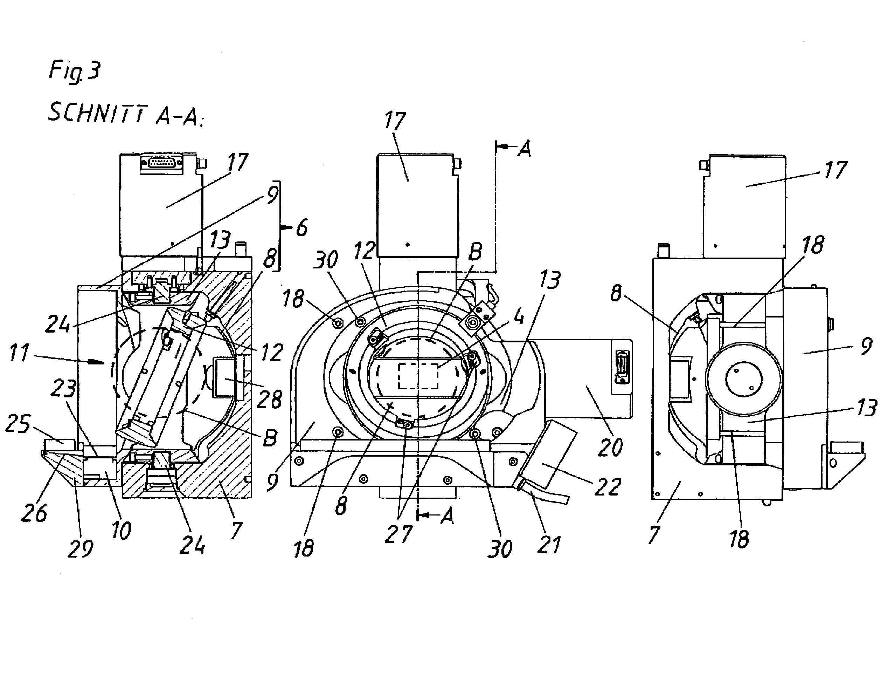

In Fig. 3 ist dieser Bearbeitungsbereich B angedeutet und wird im Wesentlichen vom Innenring 12 begrenzt. In diesen Bearbeitungsbereich B wird der in Fig. 3 strichliert angedeutete Formrohling 4 über eine nicht dargestellte Halteplatte an den Befestigungselementen 27 aufgespannt. Im rechten unteren Bereich ist am zweiten Abdeckteil 9 zum einen der Stutzen 22 für die Luftabsaugung und der Abflussschlauch 21 aus der Auffangwanne 10 angebracht. Der zweite Abdeckteil 9 ist über die Befestigungselemente 30 am Außenring 13 befestigt, vorzugsweise verschraubt. Das erste Abdeckteil 8 ist dagegen über die Verbindungsbolzen 18 direkt mit dem zweiten Abdeckteil 9 verbunden, vorzugsweise verschraubt.

Im Schnitt A-A ist zwischen dem Befestigungsbereich B und dem Trägerelement 7 das erste Abdeckteil 8 der Abdeckvorrichtung 6 ersichtlich. Dieser schüsselförmige erste Abdeckteil 8 umgibt gemeinsam mit dem Außenring 13 die gesamte vom Bearbeitungswerkzeug 5 abgewandte Seite des Bearbeitungsbereichs B. Nach vorne in Richtung Bearbeitungswerkzeug 5 wird der Bearbeitungsbereich B vom ringförmigen zweiten Abdeckteil 9 teilweise umgeben. Da aufgrund von Versuchen nur sehr wenig Flüssigkeit in Richtung Bearbeitungswerkzeug 5 zurückspritzt, kann die Abdeckvorrichtung 6 eine Öffnung 11 aufweisen. Das gesamte im hinteren Bereich und im vorderen Bereich aufgefangene Wasser fließt in Richtung Auffangwanne 10 zusammen. Gemäß Schnitt A-A ist die Auffangwanne 10 allerdings noch durch ein Schutzblech 23 geschützt. Dieses Schutzblech 23 ist nur dann angebracht, wenn der Formrohling 4 "trocken" bearbeitet wird, um ein Verstauben des Abflussschlauches 21 zu verhindern. Wenn dieses Schutzblech 23 entfernt ist, kann zusammenfließendes Wasser ungehindert in die Auffangwanne 10 und weiter über den Abflussschlauch 21 abgeführt werden. Am zweiten Abdeckteil 9 ist ein Aufsatz 29 befestigt, der ein bürstenförmiges Schutzelement 25 und eine Abfließschräge 26 aufweist. Der Außenring 13 ist über das Drehgelenk 24 drehbar am Trägerelement 7 gelagert.

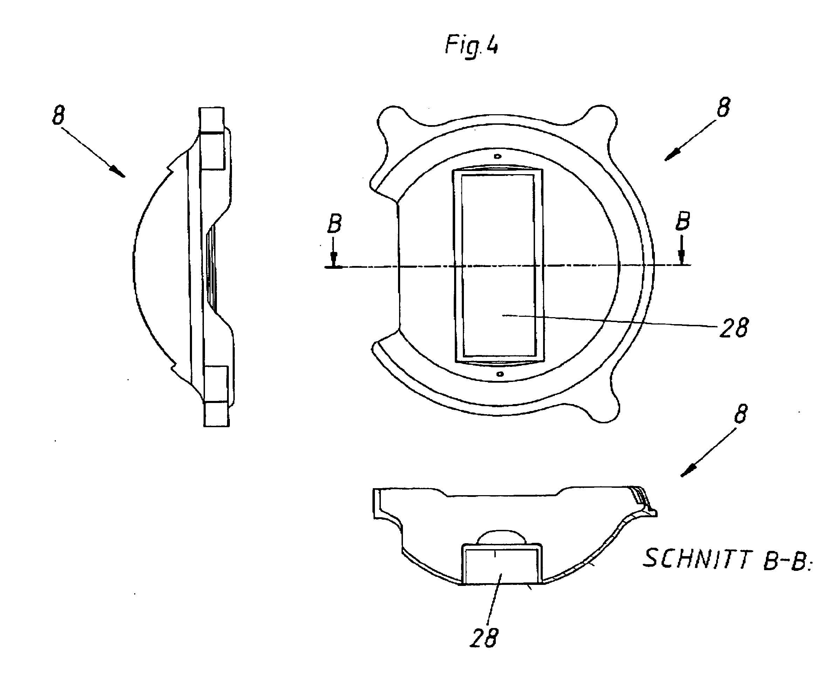

Beim Umrüsten von einer "trockenen" Bearbeitungsvorrichtung 1 auf eine "nasse" Bearbeitungsvorrichtung 1 müssen die Abstände zwischen den einzelnen Komponenten berücksichtigt werden. Vor allem zwischen dem Innenring 13 und dem Trägerelement 7 ist im vom Bearbeitungswerkzeug 5 abgewandten Bereich des Befestigungsbereichs B ein sehr geringer Abstand gegeben, sodass sich dazwischen nicht genügend Platz für eine relativ dicke und formstabile Ausbildung des ersten Abdeckteils 8 verbleibt (siehe Schnitt A-A). Um ein solches Umrüsten dennoch zu ermöglichen, ist in diesem ersten Abdeckteil ein reißfestes elastisches Element 28 (z.B. ein Tuch oder eine Plastikfolie) eingespannt bzw. angebracht. In Fig. 4 ist dieses erste Abdeckteil 8 mitsamt dem elastischen Element 28 gezeigt. Es ist auch die Schalenförmigkeit dieses ersten Abdeckteils 8 ersichtlich.

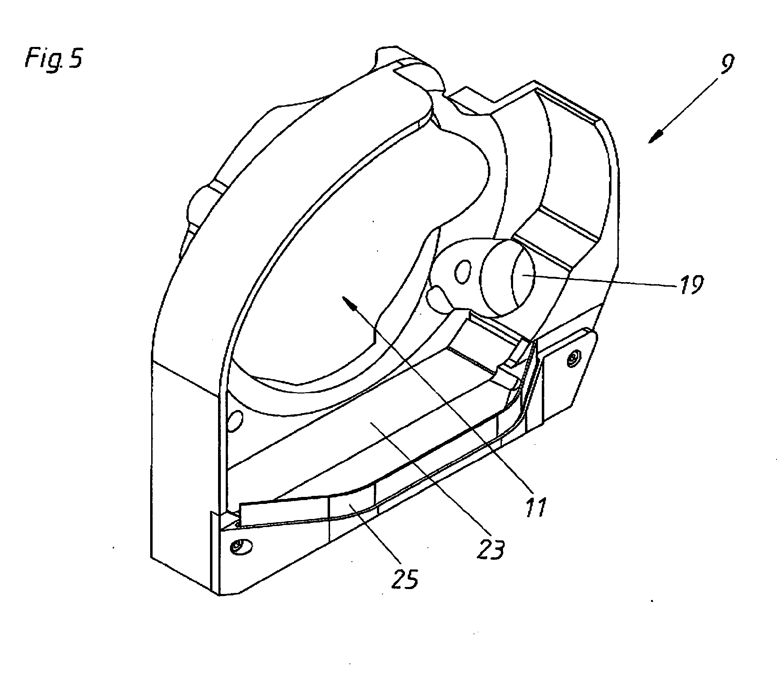

In Fig. 5 ist eine 3D-Ansicht des zweiten Abdeckteils 9 mit der Öffnung 11, dem bürstenförmigen Schutzelement 25 und der Luftabsaugöffnung 19 gezeigt. Dabei ist die Auffangwanne 10 durch das Schutzblech 23 abgedeckt.

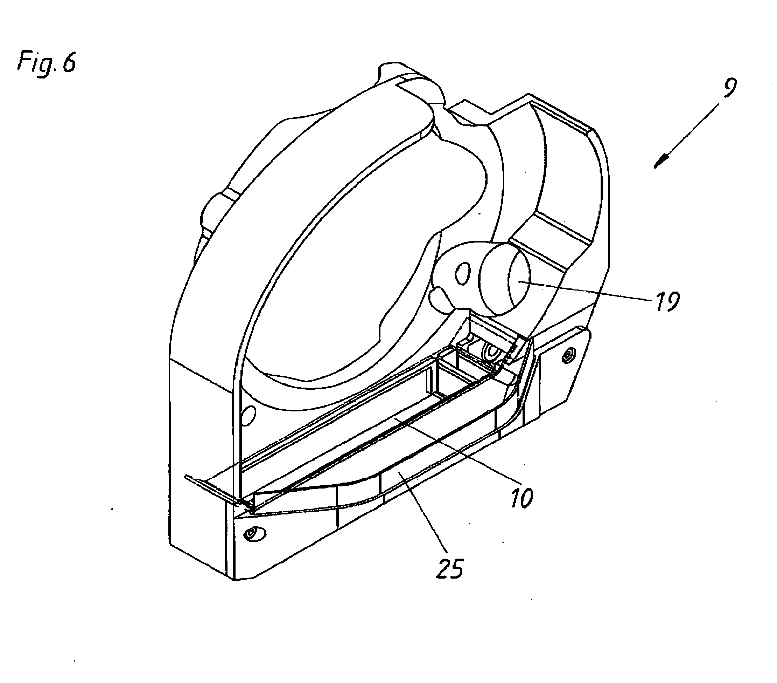

Demgegenüber ist in Fig. 6 das Schutzblech 23 nur strichliert dargestellt bzw. entfernt, wodurch die Auffangwanne 10 offen ist. Bei der dadurch möglichen "nassen" Benützung der Bearbeitungsvorrichtung 1 sollte die Luftabsaugöffnung 19 durch einen hier nicht dargestellten Deckel verschlossen sein.

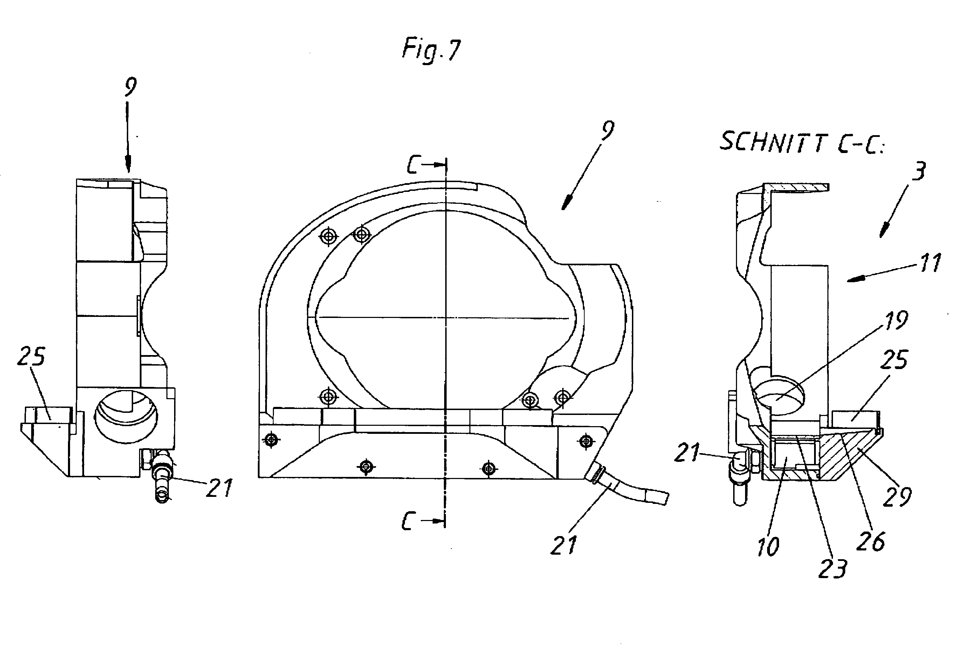

In Fig. 7 ist nochmals das Trägerelement 7 samt Abflussschlauch 21, Auffangwanne 10 und Aufsatz 29 ersichtlich. Grundsätzlich kann jedes Abdeckteil 8 oder 9 ein- oder mehrteilig sein.

## Patentansprüche

1. Bearbeitungsvorrichtung (1) für die Herstellung von zahntechnischen Werkstücken, mit
- einem Gehäuse (2),
- einer relativ zum Gehäuse (2) bewegbaren Haltevorrichtung (3) für einen Formrohling (4) und
- einem Bearbeitungswerkzeug (5), mit dem unter Zufuhr von Flüssigkeit, insbesondere Wasser, in einem Bearbeitungsbereich (B) der Formrohling (4) bearbeitbar ist,
wobei der Bearbeitungsbereich (B) von einer vom Gehäuse (2) gesonderten Abdeckvorrichtung (6) zumindest teilweise umgeben ist, wobei die Abdeckvorrichtung (6) an der Haltevorrichtung (3) befestigt und mit der Haltevorrichtung (3) mit bewegbar ist, **dadurch gekennzeichnet, dass** die Abdeckvorrichtung (6) einen ersten Abdeckteil (8) und einen zweiten Abdeckteil (9) aufweist, wobei der erste, vorzugsweise schalenförmige, Abdeckteil (8) die vom Bearbeitungswerkzeug (5) abgewandte Seite des Bearbeitungsbereichs (B) abdeckt und der zweite, vorzugsweise ringförmige, Abdeckteil (9) die dem Bearbeitungswerkzeug (5) zugewandte Seite des Bearbeitungsbereichs (B) umgibt.

2. Bearbeitungsvorrichtung nach Anspruch 1, **dadurch gekennzeichnet, dass** die Haltevorrichtung (3) an einem am Gehäuse (2) befestigten Trägerelement (7) bewegbar gelagert ist.

3. Bearbeitungsvorrichtung nach Anspruch 2, **dadurch gekennzeichnet, dass** die Abdeckvorrichtung (6) zwischen Trägerelement (7) und Bearbeitungsbereich (B) angeordnet ist.

4. Bearbeitungsvorrichtung nach einem der Ansprüche 1 bis 3, **dadurch gekennzeichnet, dass** die Haltevorrichtung (3) die Abdeckvorrichtung (6) mitbildet.

5. Bearbeitungswerkzeug nach einem der Ansprüche 1 bis 4, **dadurch gekennzeichnet, dass** der zweite Abdeckteil (9) eine Auffangwanne (10) für die Flüssigkeit aufweist.

6. Bearbeitungsvorrichtung nach einem der Ansprüche 1 bis 5, **dadurch gekennzeichnet, dass** die Abdeckvorrichtung (6) auf der dem Bearbeitungswerkzeug (5) zugewandten Seite eine Öffnung (11) aufweist.

7. Bearbeitungsvorrichtung nach Anspruch 6, **dadurch gekennzeichnet, dass** der Bearbeitungsbereich (B) bis auf die Öffnung (11) von der Abdeckvorrichtung (6) umgeben bzw. verschlossen ist.

8. Bearbeitungsvorrichtung nach einem der Ansprüche 1 bis 7, **dadurch gekennzeichnet, dass** die Haltevorrichtung (3) einen Innenring (12) und einen Außenring (13) aufweist, die kardangelenkförmig angeordnet sind, wobei die Abdeckvorrichtung (6) am Außenring (13) befestigt ist.

9. Bearbeitungsvorrichtung nach einem der Ansprüche 1 bis 8, **dadurch gekennzeichnet, dass** am Bearbeitungswerkzeug (5) eine Zuführeinrichtung (14) für die Flüssigkeit angeordnet ist.

## Claims

1. A processing apparatus (1) for the production of dental workpieces, comprising
- a housing (2),
- a holding device (3) moveable relative to the housing (2) for a shaping blank (4), and
- a processing tool (5) with which the shaping blank (4) can be processed with the feed of liquid, in particular water, in a processing region (B),
wherein the processing region (B) is at least partially surrounded by a cover device (6) separate from the housing (2), wherein the cover device (6) is fixed to the holding device (3) and is moveable with the holding device (3), **characterised in that** the cover device (6) has a first cover portion (8) and a second cover portion (9), wherein the first, preferably shell-shaped, cover portion (8) covers the side of the processing region (B), that is remote from the processing tool (5), and the second, preferably annular, cover portion (9) surrounds the side of the processing region (B), that is towards the processing tool (5).

2. A processing apparatus according to 1 **characterised in that** the holding device (3) is mounted moveably to a carrier element (7) fixed to the housing (2).

3. A processing apparatus according to claim 2 **characterised in that** the cover device (6) is arranged between the carrier element (7) and the processing region (B).

4. A processing apparatus according to one of claims 1 to 3 **characterised in that** the holding device (3) also forms the cover device (6).

5. A processing apparatus according to one of claims 1 to 4 **characterised in that** the second cover portion (9) has a catch trough (10) for the liquid.

6. A processing apparatus according to one of claims 1 to 5 **characterised in that** the cover device (6) has an opening (11) on the side towards the processing tool (5).

7. A processing apparatus according to claim 6 **characterised in that** the processing region (B) is closed or surrounded by the cover device (6) except for the opening (11).

8. A processing apparatus according to one of claims 1 to 7 **characterised in that** the holding device (3) has an inner ring (12) and an outer ring (13) which are arranged in the form of a cardan joint, wherein the cover device (6) is fixed to the outer ring (13).

9. A processing apparatus according to one of claims 1 to 8 **characterised in that** a feed device (14) for the liquid is arranged on the processing tool (5).

## Revendications

1. Dispositif d'usinage (1) pour la fabrication de pièces à usiner dentaires, avec :
- un boîtier (2),
- un dispositif de support (3), pouvant être déplacé par rapport au boîtier (2), pour une ébauche (4) et
- un outil d'usinage (5), au moyen duquel l'ebauche (4) peut être usinée par adjonction de liquide, en particulier d'eau, dans une zone d'usinage (B),
la zone d'usinage (B) étant entourée, tout au moins en partie, par un dispositif de couverture (6) séparé du boîtier (2), le dispositif de couverture (6) étant fixé au dispositif de support (3) et pouvant être déplacé conjointement avec le dispositif de support (3),
**caractérisé en ce que** le dispositif de couverture (6) présente un premier élément de couverture (8) et un deuxième élément de couverture (9), le premier élément de couverture (8), de préférence en forme de coupelle, recouvrant le côté de la zone d'usinage (B) qui se trouve à l'opposé de l'outil d'usinage (5) et le deuxième élément de couverture (9), de préférence de forme annulaire, entoure le côté de la zone d'usinage (B) qui fait face à l'outil d'usinage (5).

2. Dispositif d'usinage selon la revendication 1, **caractérisé en ce que** le dispositif de support (3) est agencé de manière mobile au niveau d'un élément porteur (7) fixé au boîtier (2).

3. Dispositif d'usinage selon la revendication 2, **caractérisé en ce que** le dispositif de couverture (6) est disposé entre l'élément porteur (7) et la zone d'usinage (B).

4. Dispositif d'usinage selon l'une des revendications 1 à 3, **caractérisé en ce que** le dispositif de support (3) forme conjointement le dispositif de couverture (6).

5. Outil d'usinage selon l'une des revendications 1 à 4, **caractérisé en ce que** le deuxième élément de couverture (9) présente un bac de rétention (10) pour le liquide.

6. Dispositif d'usinage selon l'une des revendications 1 à 5, **caractérisé en ce que** le dispositif de couverture (6) présente un orifice (11) sur le côté faisant face à l'outil d'usinage (5).

7. Dispositif d'usinage selon la revendication 6, **caractérisé en ce que** la zone d'usinage (B) est entourée, respectivement fermée par le dispositif de couverture (6), à l'exception de l'orifice (11).

8. Dispositif d'usinage selon l'une des revendications 1 à 7, **caractérisé en ce que** le dispositif de support (3) présente une bague intérieure (12) et une bague extérieure (13) qui sont disposées en forme d'articulation à cardan, le dispositif de couverture (6) étant fixé au niveau de la bague extérieure (13).

9. Dispositif d'usinage selon l'une des revendications 1 à 8, **caractérisé en ce qu'**un dispositif d'alimentation (14) pour le liquide est disposé au niveau de l'outil d'usinage (5).
